# EUROPÄISCHE PATENTSCHRIFT

(11) **EP 3 805 581 B1**
(45) Veröffentlichungstag und Bekanntmachung des Hinweises auf die Patenterteilung: **17.08.2022**
(21) Anmeldenummer: 20200367.9
(22) Anmeldetag: 06.10.2020
(51) Int. Cl.: F16B 37/08, F16B 37/14, F16B 41/00

(54) **MANIPULATIONSSICHERUNG ZUR DAUERHAFTEN SICHERUNG VON MUTTERN**
TAMPER-PROOF SYSTEM FOR PERMANENTLY SECURING NUTS
SYSTÈME DE SÉCURITÉ DE MANIPULATION DESTINÉ À LA SÉCURITÉ PERMANENTE DES ÉCROUS

(30) Priorität: 07.10.2019 DE 202019105522 U
(43) Veröffentlichungstag der Anmeldung: 14.04.2021
(73) Patentinhaber: Geyer, Elke, 35510 Butzbach (DE); Fett, Maximilian, 35516 Münzenberg (DE)
(72) Erfinder: Geyer, Elke, 35510 Butzbach (DE); Fett, Maximilian, 35516 Münzenberg (DE)
(74) Vertreter: Hebing, Norbert

(56) Entgegenhaltungen:
- DE-A1-102014 111 607
- US-A- 4 659 273

## Beschreibung

Die Erfindung bezieht sich auf eine Manipulationssicherung zur dauerhaften Sicherung von Muttern, die auf einen Schraubbolzen bis zu einem planen Anschlag aufgeschraubt sind, aufweisend eine innere Hülse und eine dazu koaxial angeordnete äußere Hülse, die gegenüber der inneren Hülse frei drehbar ist und einen Kragen aufweist.

Eine Manipulationssicherung hat generell die Aufgabe, eine Schraubverbindung dauerhaft gegen ein Lösen zu sichern, so dass ein unautorisierter Zugang zu der Mutter verhindert wird. Zu diesem Zweck werden gegenüber der Mutter drehbare Kappen verwendet, die auf die Mutter aufgesteckt werden, so dass ein Schraubschlüssel nicht mehr unmittelbar an die Mutter angesetzt werden kann.

Um ein Entfernen der Kappe zu verhindern, ist deren Befestigung an der Mutter so ausgeführt, dass sie entweder nicht mehr zerstörungsfrei oder nur umständlich von der Mutter entfernt werden kann.

Eine gattungsgemäße Manipulationssicherung ist in der DE 101 56 876 A1 beschrieben. Demnach ist eine flache innere Hülse zwischen der Mutter und einem planen Anschlag eingeklemmt. Die äußere Hülse, die die Form einer Kappe hat, wird auf die Mutter aufgesteckt und rastet an einem Hinterschnitt an der inneren Hülse ein. Da nur eine Rastverbindung besteht, kann die Kappe leicht z. B. mittels eines unter die Kappe greifenden Schraubenziehers von der Mutter abgehoben werden, um die Mutter frei zu legen.

Zum Stand der Technik gehört auch die US 4,659,273. Diese offenbart eine innere Hülse, die drehgesichert auf eine Mutter aufsteckbar ist, wobei eine äußere Hülse drehbar auf der inneren Hülse befestigt ist. Dazu weist die äußere Hülse innere, sich axial erstreckende Arme auf, die an ihren Enden jeweils eine Lippe besitzen, die in eine umlaufende Nut an der Außenseite der inneren Hülse eingreift.

Die Erfindung beruht daher auf der Aufgabe, eine verbesserte Manipulationssicherung zu schaffen, die nur schwer zu lösen ist und dennoch einfach zu montieren ist.

Zur Lösung der Aufgabe schlägt die Erfindung vor, dass die innere Hülse auf die Mutter aufsteckbar ist, dass mit der inneren Hülse wenigstens ein Sperrarm gelenkig verbunden ist, so dass dieser gegenüber der gemeinsamen Achse der Hülsen nach außen kippbar ist, wobei er im gekippten Zustand über dem Kragen an der äußeren Hülse liegt, und dass der Sperrarm an seiner der gemeinsamen Achse zugewandten Seite Mittel aufweist, die zum Eingriff in das Gewinde des über die Mutter hervorstehenden Schraubbolzens geeignet sind.

Der Kragen kann von einem Randabschnitt der äußeren Hülse gebildet werden oder gegenüber der äußeren Hülse abgewinkelt sein und nach innen weisen.

Die beiden Hülsen werden im nicht gekippten Zustand der Sperrarme zusammengesteckt und sodann auf den über die Mutter hinausragenden Schraubbolzen geschoben, bis die innere Hülse auf der Mutter aufgesteckt ist. Dabei drängt der Schraubbolzen den wenigstens einen Sperrarm nach außen, wobei er über dem Kragen an der äußeren Hülse zu liegen kommt, wodurch ein Abziehen der äußeren Hülse verhindert ist.

Aber auch die innere Hülse kann nicht abgezogen werden, da die Innenseite des wenigstens einem Sperrarm sich in den Schraubbolzen verrastet hat.

Damit der Sperrarm nur schwer erreicht werden kann, wenn die Manipulationssicherung aufgesteckt worden ist, sieht die Erfindung weiterhin vor, dass die Länge der äußeren Hülse größer ist als die der inneren Hülse, wobei die innere Hülse sich im unteren Bereich der äußeren Hülse und der wenigstens eine Sperrarm sich im oberen Bereich der äußeren Hülse befindet, und dass der Kragen im oberen Bereich der äußeren Hülse ausgebildet ist.

Bei dieser Ausführung umgibt der obere Bereich der äußeren Hülse den Sperrarm, so dass dieser allenfalls noch von oben zu erreichen sind.

Um eine gleichmäßige Verteilung der Haltekräfte vorzusehen, sieht die Erfindung vor, dass die innere Hülse mehrere Sperrarme aufweist, die in einem Kreis um die gemeinsame Achse angeordnet sind.

Vorzugsweise weist die innere Hülse vier Sperrarme auf, die jeweils um 90° zueinander versetzt angeordnet sind.

Die beiden Hülsen werden, bevor sie auf den Schraubbolzen und die Mutter aufgesteckt werden, zunächst ineinander geschoben. Um dies zu ermöglichen, ist vorgesehen, dass der Kragen eine zentrale Öffnung umgibt und dass der Durchmesser der koaxialen Einhüllenden der nicht gekippten Sperrarme kleiner ist als der Durchmesser der zentralen Öffnung.

Der Kragen besitzt vorzugsweise die Form eines Hohlkegelstumpfes. Dadurch verlaufen die Außenseiten der Sperrarme im gekippten Zustand im Wesentlichen parallel zur inneren Mantelfläche des Hohlkegels.

Um zu verhindern, dass z. B. mit einem Schraubenzieher unter die unteren Kanten der inneren und äußeren Hülse gegriffen werden kann, sind deren Abmessungen so gewählt, dass die untere Kante der inneren Hülse in Kontakt mit einer planen Anlage gelangt und die untere Kante der äußeren Hülse einen kleine Abstand zu der planen Fläche aufweist, sobald die Hülsen auf die Mutter aufgesteckt worden sind. Der Abstand ist so gewählt, dass einerseits kein Kontakt zur planen Fläche vorliegt, der die freie Drehbarkeit der äußeren Hülse behindern würde, und andererseit ein Untergreifen der äußeren Hülse mit einem Werkzeug weiterhin verhindert wird. Dazu sieht die Erfindung vor, dass die Höhe der inneren Hülse ein wenig größer ist als der Abstand des inneren Randes des Kragens von der Unterkante der äußeren Hülse, so dass die untere Kante der äußeren Hülse nicht bis zur Unterkante der inneren Hülse reicht, wenn der Kragen an der inneren Hülse anliegt.

Um die Sperrarme im nichtgekippten Zustand durch die zentrale Öffnung des Kragens hindurchführen zu können, ist vorgesehen, dass im nicht gekippten Zustand die Außenseiten der Sperrarme axial ausgerichtet sind und die Innenseiten eine Schrägstellung aufweisen, die der Steigung des Kragens entspricht.

Da im gekippten Zustand die inneren Seiten der Sperrarme an der Mantelfläche des Schraubbolzens anliegen, verlaufen im gekippten Zustand die Innenseiten vertikal, während die Außenseiten schräg ausgerichtet sind. Somit verbleibt zwischen der Außenseite der Sperrarme und dem Kragen nur ein kleiner Spalt, in den nur schwer ein Werkzeug angesetzt werden kann.

Damit die innere Hülse zumindest in einer axialen Richtung in der äußeren Hülse gehalten ist, ist vorgesehen, dass die innere Hülse einen nach innen weisenden Flansch besitzt, von dessen innerem Rand der oder die Sperrarme abstehen und gegen den der innere Rand des Kragens anlegbar ist.

Um zu verhindern, dass die innere Hülse auf der Mutter gedreht werden kann, ist vorgesehen, dass die innere Hülse an ihrer inneren Mantelfläche axial ausgerichtete Rillen besitzt, die in die Kanten der Mutter eingreifen.

Die gelenkige Verbindung zwischen den Sperrarmen und der inneren Hülse wird vorzugsweise durch Filmscharniere gebildet. Die innere Hülse und die Sperrarme sind somit in einem Stück ausgeführt.

Im Folgenden wird anhand eines Ausführungsbeispiels die Erfindung näher erläutert. Dazu zeigen:
- Fig. 1: einen Querschnitt durch die Manipulationssicherung, die noch nicht auf eine Mutter aufgesteckt ist,
- Fig. 2: eine Draufsicht auf die Manipulationssicherung gemäß Fig. 1,
- Fig. 3: einen Querschnitt durch die Manipulationssicherung, die auf eine Mutter und einen über die Mutter hervorstehenden Schraubbolzen aufgesteckt ist,
- Fig. 4: eine perspektivische Ansicht der Manipulationssicherung gemäß der Situation der Fig. 3 und
- Fig. 5: eine Draufsicht auf die Manipulationssicherung gemäß der Situation nach Fig. 3.

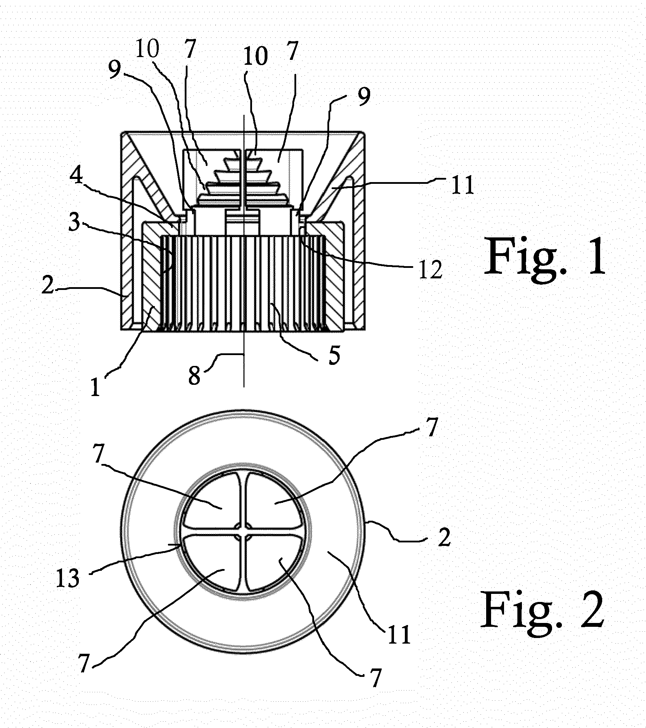

Es wird zunächst auf die Fig. 1 und 2 Bezug genommen. Die Manipulationssicherung besteht demnach aus einer inneren Hülse 1 sowie einer äußeren Hülse 2. Die innere Hülse 1 weist einen Aufsteckbereich 3 auf, der an seinem oberen Ende einen nach innen weisenden Flansch 4 aufweist. Unterhalb des Flansches 4 besitzt der Aufsteckbereich 3 an seiner Innenseite in Längsrichtung verlaufende Rillen 5, in denen die Kanten z. B. einer Sechskantmutter 6 eingreifen, wenn die innere Hülse 1 auf die Mutter 6 drehgesichert aufgesteckt wird.

Oberhalb des Flansches 4 befinden sich an dessen inneren Rand vier Sperrarme 7, die - wie aus der Draufsicht der Fig. 2 hervorgeht - sich jeweils über ein Viertelsegment erstrecken. Die Sperrarme 7 sind hier in ihrer nicht gekippten Grundstellung gezeigt, wobei sie einen zylinderförmigen Ring bilden. Ihre Außenseiten erstrecken sich somit in axialer Richtung parallel zur gemeinsamen Achse 8 der beiden Hülsen 1, 2.

Die Innenseiten verlaufen schräg zur gemeinsamen Achse 8 und schließen somit einen kegelförmigen Raum ein, der sich zum Flansch 4 hin öffnet. Der Querschnitt der Sperrarme 7 hat somit die Form eines Dreiecks.

Die Sperrarme 7 verlaufen somit sich verjüngend in Richtung auf den Flansch 4, wobei der dünner werdende Anschluss ein Filmscharnier 9 bildet, das es erlaubt, die Sperrarme 7 nach außen zu kippen.

Die Innenseiten der Sperrarme 7 sind mit gewindeförmig umlaufenden Rippen 10 versehen, die in der Lage sind, in das Gewinde eines Schraubbolzens einzugreifen.

Die äußere Hülse 2 ist etwas höher als die innere Hülse 1 mit den Sperrarmen 7 zusammen. Von ihrer Oberkante ausgehend verläuft nach innen ein Kragen 11 in Form eines Hohlkegelstumpfes. Sein innerer Rand umschließt eine zentrale Öffnung 12.

Der Durchmesser der zentralen Öffnung 12 entspricht dem Durchmesser der Umhüllenden 13, die die Sperrarme 7 im aufgerichteten Zustand koaxial umschließt. Dadurch kann die innere Hülse 1 von unten in die äußere Hülse 2 hineingeschoben werden, wobei die Sperrarme 7 durch die zentrale Öffnung 12 hindurch gelangen, bis der innere Rand des Kragens 11 an dem Flansch 4 der inneren Hülse 1 zur Anlage gelangt.

Die Manipulationssicherung besteht somit aus zwei einstückigen Teilen, nämlich zum einem aus der äußeren Hülse 2 mit dem Kragen 12 und zum anderen aus der inneren Hülse 1 mit dem Flansch 4 und den Sperrarmen 7. Beide Teile werden aus Kunststoff, z. B. im Spritzgussverfahren, hergestellt. Dabei besteht die innere Hülse 1 aus einem weichen Kunststoff, in den sich die Kanten der Mutter 6 einpressen. Die äußere Hülse 2 wird aus einem spröden Kunststoff hergestellt, der dazu Beimischungen von Glasfasern erhält.

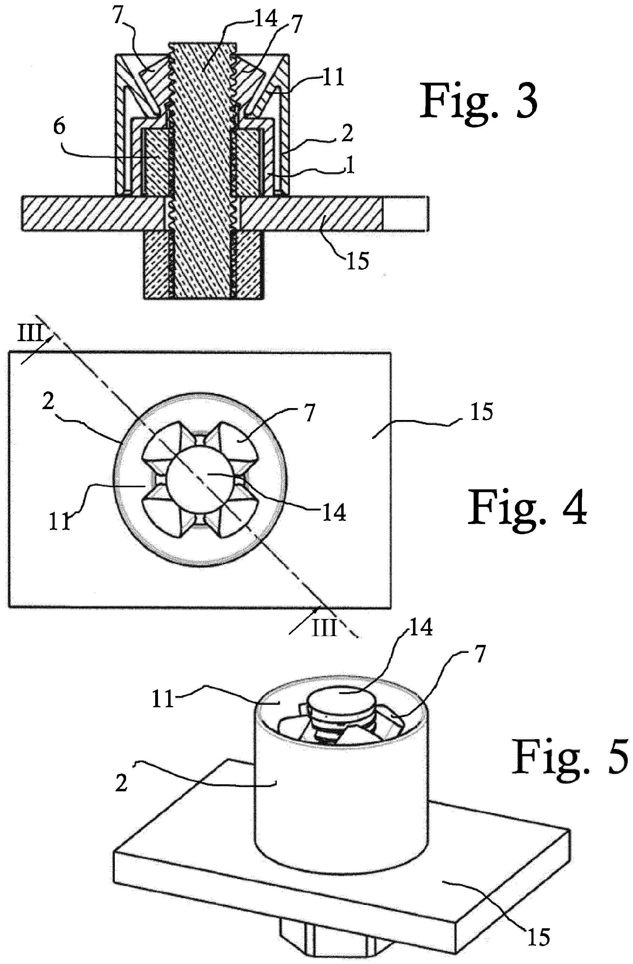

Die Fig. 3-5 verdeutlichen die Funktionsweise der Erfindung. Dazu ist die Manipulationssicherung auf eine Mutter 6 und eine über die Mutter hervorstehenden Schraubbolzen 14 gezeigt. Die Mutter ist fest gegen ein Bauteil 15 gezogen und liegt an einer planen Fläche des Bauteils 15 an.

Die gemäß Fig. 1 zusammengesteckte Manipulationssicherung wird auf den Schraubbolzen 14 aufgesteckt, bis der Aufsteckbereich 3 die Mutter 6 umfasst. Da die Kanten der Mutter 6 in die Rillen 5 eingreifen, kann die innere Hülse 1 nicht gegenüber der Mutter 6 gedreht werden.

Beim Aufstecken werden die Sperrarme 7 vom Schraubbolzen 14 nach und nach nach außen gedrückt, bis ihre Innenflächen axial ausgerichtet sind. In dieser Situation sind die Rippen 10 an der Innenseite der Sperrarme 7 im Eingriff mit dem Gewinde des Schraubbolzens 14, so dass ein Abziehen nicht mehr möglich ist.

Gelichzeitig verlaufen nun die Außenflächen der Sperrarme 7 in etwa parallel zu der schräg verlaufenden inneren Mantelfläche des Kragens 12.

Die äußere Hülse 2, die jetzt die innere Hülse 1 und die Sperrarme 7 umgibt, verhindert, dass dort Werkzeuge angesetzt werden können. Sie kann aber ebenfalls nicht nach oben abgezogen werden, da dies von den gekippten Sperrarmen 7 verhindert wird.

Um die freie Drehbarkeit der äußeren Hülse 2 gegenüber der inneren Hülse 1 zu gewährleisten, endet die äußere Hülse 2 knapp oberhalb der planen Fläche des Bauteils 15, so dass keine Reibungskräfte zwischen dem Bauteil und der unteren Kante der äußeren Hülse 2 auftreten.

### Bezugszeichenliste

- 1: innere Hülse
- 2: äußere Hülse
- 3: Aufsteckbereich
- 4: Flansch
- 5: Rillen

- 6: Mutter
- 7: Sperrarme
- 8: Achse
- 9: Filmscharnier
- 10: Rippen

- 11: Kragen
- 12: zentrale Öffnung
- 13: Umhüllende
- 14: Schraubbolzen
- 15: Bauteil

## Patentansprüche

1. Manipulationssicherung zur dauerhaften Sicherung von Muttern, die auf einen Schraubbolzen bis zu einem planen Anschlag aufgeschraubt sind, aufweisend eine innere Hülse (1) und eine dazu koaxial angeordnete äußeren Hülse (2), die gegenüber der inneren Hülse (1) frei drehbar ist und einen Kragen (11) aufweist,
**dadurch gekennzeichnet, dass** die innere Hülse (1) auf die Mutter (6) aufsteckbar ist, dass mit der inneren Hülse (1) wenigstens ein Sperrarm (7) gelenkig verbunden ist, so dass dieser gegenüber der gemeinsamen Achse (8) der Hülsen (1, 2) nach außen kippbar ist, wobei er im gekippten Zustand über dem Kragen (11) an der äußeren Hülse (2) liegt, und dass der Sperrarm (7) an seiner der gemeinsamen Achse (8) zugewandten Seite Mittel aufweist, die zum Eingriff in das Gewinde des über die Mutter (6) hervorstehenden Schraubbolzens (17) geeignet sind.

2. Manipulationssicherung nach Anspruch 1 **dadurch gekennzeichnet, dass** die Länge der äußeren Hülse (2) größer ist als die der inneren Hülse (1), wobei die innere Hülse (1) sich im unteren Bereich der äußeren Hülse (2) und der wenigstens eine Sperrarm (7) sich im oberen Bereich der äußeren Hülse (2) befindet, und dass der Kragen (11) im oberen Bereich der äußeren Hülse (2) ausgebildet ist.

3. Manipulationssicherung nach Anspruch 1 oder 2,
**dadurch gekennzeichnet, dass** die innere Hülse (1) mehrere Sperrarme (7) aufweist, die in einem Kreis um die gemeinsame Achse (8) angeordnet sind.

4. Manipulationssicherung nach Anspruch 3, **dadurch gekennzeichnet, dass** die innere Hülse (1) vier Sperrarme aufweist (7), die um jeweils 90° zueinander versetzt angeordnet sind.

5. Manipulationssicherung nach Anspruch 2, 3 oder 4,
**dadurch gekennzeichnet, dass** der Kragen (11) eine zentrale Öffnung (12) umgibt und dass der Durchmesser der koaxialen Einhüllenden (13) der nicht gekippten Sperrarme (7) kleiner ist als der Durchmesser der zentralen Öffnung (12).

6. Manipulationssicherung nach einem der vorhergehenden Ansprüche 2 bis 5, **dadurch gekennzeichnet, dass** der Kragen (11) die Form eines Hohlkegelstumpfes hat, der sich von der Oberkante der äußeren Hülse (2) in Richtung auf den unteren Bereich der äußeren Hülse (2) erstreckt.

7. Manipulationssicherung nach Anspruch 6, **dadurch gekennzeichnet, dass** die Höhe der inneren Hülse (1) ein wenig größer ist als der Abstand des inneren Randes des Kragens (11) von der Unterkante der äußeren Hülse (2) , so dass die untere Kante der äußeren Hülse (2) nicht bis zur Unterkante der inneren Hülse (1) reicht, wenn der Kragen (11) an der inneren Hülse (1) anliegt.

8. Manipulationssicherung nach Anspruch 6 oder 7
**dadurch gekennzeichnet, dass** im nicht gekippten Zustand eines Sperrarmes (7) dessen Außenseiten axial ausgerichtet ist und dessen Innenseiten eine Schrägstellung aufweist, die der Steigung des Kragens (11) entspricht.

9. Manipulationssicherung nach einem der vorhergehenden Ansprüche, **dadurch gekennzeichnet, dass** die innere Hülse (1) einen nach innen weisenden Flansch (4) besitzt, von dessen innerem Rand der oder die Sperrarme (7) abstehen und gegen den der innere Rand des Kragens (11) anlegbar ist.

10. Manipulationssicherung nach einem der vorhergehenden Ansprüche, **dadurch gekennzeichnet, dass** die innere Hülse (1) an ihrer inneren Mantelfläche axial ausgerichtete Rillen (5) besitzt.

11. Manipulationssicherung nach einem der vorhergehenden Ansprüche, **dadurch gekennzeichnet, dass** die gelenkige Verbindung des oder der Sperrarme (7) jeweils von einem Filmscharnier (9) gebildet ist.

## Claims

1. Tamper-proof system for the permanent securing of nuts that are screwed onto a screw bolt up to a planar stop, comprising an inner sleeve (1) and an outer sleeve (2) which is arranged coaxially thereto, which can be freely rotated vis-à-vis the inner sleeve (1), and comprises a collar (11),
**characterised in that** the inner sleeve (1) is mountable on the nut (6), that at least one blocking arm (7) is connected to the inner sleeve (1) in an articulated manner so that said arm can be tilted outwards in relation to the common axis (8) of the sleeves (1, 2), wherein in the tilted state it lies on the outer sleeve (2) over the collar (11), and **in that** on its side facing the common axis (8), the blocking arm (7) has means that are suitable for engaging in the thread of the screw bolt (17) protruding above the nut (6).

2. Tamper-proof system according to claim 1, **characterised in that** the length of the outer sleeve (2) is greater than that of the inner sleeve (1), wherein the inner sleeve (1) is located in the lower area of the outer sleeve (2) and the at least one blocking arm (7) is located in the upper area of the outer sleeve (2), and **in that** the collar (11) is formed on the upper area of the outer sleeve (2).

3. Tamper-proof system according to claim 1 or 2, **characterised in that** the inner sleeve (1) comprises several blocking arms (7), which are arranged in a circle around the common axis (8).

4. Tamper-proof system according to claim 3, **characterised in that** the inner sleeve (1) comprises four blocking arms (7) which are each arranged offset by 90° with regard to each other.

5. Tamper-proof system according to claim 2, 3 or 4, **characterised in that** the collar (11) surrounds a central opening (12) and **in that** the diameter of the coaxial encasement (13) of the non-tilted blocking arms (7) is smaller than the diameter of the central opening (12) .

6. Tamper-proof system according to any one of the preceding claims 2 to 5, **characterised in that** the collar (11) is in the shape of a hollow truncated cone which extends from the upper edge of the outer sleeve (2) in the direction of the lower area of the outer sleeve (2).

7. Tamper-proof system according to claim 6, **characterised in that** the height of the inner sleeve (1) is a little greater than the distance of the inner edge of the collar (11) from the lower edge of the outer sleeve (2) so that the lower edge of the outer sleeve (2) does not reach the lower edge of the inner sleeve (1) when the collar (11) is in contact with the inner sleeve (1).

8. Tamper-proof system according to claim 6 or 7, **characterised in that** in the non-tilted state of a blocking arm (7), its outer sides are axially orientated and its inner sides assume an oblique position which corresponds to the slope of the collar (11).

9. Tamper-proof system according to any one of the preceding claims, **characterised in that** the inner sleeve (1) comprises an inwardly directed flange (4), from the inner edge of which the blocking arm(s) 7 project(s) and onto which the inner edge of the collar (11) can be applied.

10. Tamper-proof system according to any one of the preceding claims, **characterised in that** the inner sleeve (1) has axially orientated grooves (5) on its inner lateral surface.

11. Tamper-proof system according to any one of the preceding claims, **characterised in that** the articulated connection of the blocking arm(s) (7) is in each case formed of a film hinge (9).

## Revendications

1. Sécurisation contre des manipulations, destinée à assurer la sécurisation durable d'écrous, qui sont vissés sur un boulon fileté jusqu'à une mise en butée plane, comprenant une douille (1) interne et une douille (2) externe, placée de manière coaxiale par rapport à celle-ci, qui est librement rotative à l'encontre de la douille (1) interne et qui comporte une collerette (11), **caractérisée en ce que** la douille (1) interne est emboitable sur l'écrou (6), **en ce qu'**au moins un bras de blocage (7) est relié de manière articulée avec la douille (1) interne, de telle sorte qu'il soit également susceptible de pivoter vers l'extérieur, par rapport à l'axe (8) commun des douilles (1, 2), dans la position pivotée, celui-ci se situant au-dessus de la collerette (11) sur la douille (2) externe, et **en ce que**, sur son côté qui fait face à l'axe (8) commun, le bras de blocage (7) comporte des moyens qui sont aptes à s'engager dans le filetage du boulon fileté (17) débordant pardessus les écrous (6).

2. Sécurisation contre des manipulations selon la revendication 1, **caractérisée en ce que** la longueur de la douille (2) externe est supérieure à celle de la douille (1) interne, la douille (1) interne se trouvant dans la zone inférieure de la douille (2) externe et l'au moins un bras de blocage (7) se trouvant dans la zone supérieure de la douille (2) externe, et **en ce que** la collerette (11) est conçue dans la zone supérieure de la douille (2) externe.

3. Sécurisation contre des manipulations selon la revendication 1 ou 2, **caractérisée en ce que** la douille (1) interne comporte plusieurs bras de blocage (7) qui sont placés dans un cercle autour de l'axe (8) commun.

4. Sécurisation contre des manipulations selon la revendication 3, **caractérisée en ce que** la douille (1) interne comporte quatre bras de blocage (7), qui sont placés avec un décalage mutuel respectif de 90°.

5. Sécurisation contre des manipulations selon la revendication 2, 3 ou 4, **caractérisée en ce que** la collerette (11) entoure un orifice (12) central et **en ce que** le diamètre de l'enveloppante (13) coaxiale du bras de blocage (7) non basculé est inférieur au diamètre de l'orifice (12) central.

6. Sécurisation contre des manipulations selon l'une quelconque des revendications 2 à 5 précédentes, **caractérisée en ce que** la collerette (11) présente la forme d'un tronc de cône creux, qui s'étend de l'arête supérieure de la douille (2) externe en direction de la zone inférieure de la douille (2) externe.

7. Sécurisation contre des manipulations selon la revendication 6, **caractérisée en ce que** la hauteur de la douille (1) interne est légèrement supérieure à l'écart entre le bord interne de la collerette (11) et l'arête inférieure de la douille (2) externe, de telle sorte que l'arête inférieure de la douille (2) externe n'arrive pas jusqu'à l'arête inférieure de la douille (1) interne, lorsque la collerette (11) s'appuie sur la douille (1) interne.

8. Sécurisation contre des manipulations selon la revendication 6 ou 7 **caractérisée en ce que** lorsqu'un bras de blocage (7) n'est pas basculé, ses côtés externes sont alignés en direction axiale et ses côtés internes sont dans une position oblique, qui correspond à la pente de la collerette (11).

9. Sécurisation contre des manipulations selon l'une quelconque des revendications précédentes, **caractérisée en ce que** la douille (1) interne détient une bride (4) dirigée vers l'intérieur, à partir du bord interne de laquelle saillit ou saillissent le ou les bras de blocage (7) et contre laquelle le bord interne de la collerette den (11) peut s'appuyer.

10. Sécurisation contre des manipulations selon l'une quelconque des revendications précédentes, **caractérisée en ce que** sur sa surface d'enveloppe, la douille (1) interne comporte des cannelures (5) orientées en direction axiale.

11. Sécurisation contre des manipulations selon l'une quelconque des revendications précédentes, **caractérisée en ce que** la liaison articulée du ou des bras de blocage (7) est chaque fois formée d'une charnière pelliculaire (9).
